# EUROPEAN PATENT APPLICATION

(11) **EP 4 832 063 A1**
(43) Date of publication of application: **28.10.2026**
(21) Application number: 24905716.7
(22) Date of filing: 24.09.2024
(51) Int. Cl.: H01M 4/13, H01M 10/0525

(54) **ELECTRODE PIECE, ELECTRODE CORE, BATTERY, AND POWER DEVICE**

(30) Priority: 22.12.2023 CN 202323528506 U
(71) Applicant: BYD Company Limited, Shenzhen, Guangdong 518118 (CN)
(72) Inventor: DENG, Dongjun, Shenzhen, Guangdong 518118 (CN); ZHANG, Hui, Shenzhen, Guangdong 518118 (CN); WANG, Xinyue, Shenzhen, Guangdong 518118 (CN); LIANG, Guihai, Shenzhen, Guangdong 518118 (CN); YI, Shijie, Shenzhen, Guangdong 518118 (CN)
(74) Representative: Mathys & Squire
(86) International application number: PCT/CN2024/120879
(87) International publication number: WO 2025/130225

(57) **Abstract**

Disclosed are an electrode sheet, an electrode core, a battery, and a power device. The electrode sheet includes a current collector and a coating layer stacked on a surface of the current collector. A portion of the current collector at an end exposed from the coating layer is formed as a tab, and a foil piece is disposed on the tab, where a ratio of a thickness of the foil piece to a thickness of the current collector is not greater than 5.

## Description

### CROSS-REFERENCE TO RELATED APPLICATIONS

The present disclosure claims priority to Chinese Patent Application No. 202323528506.3, filed with the China National Intellectual Property Administration on December 22, 2023 and entitled "ELECTRODE SHEET, ELECTRODE CORE, BATTERY, AND POWER DEVICE", which is incorporated herein by reference in its entirety.

### TECHNICAL FIELD

The present disclosure relates to the field of batteries, and specifically, to an electrode sheet, an electrode core, a battery, and a power device.

### BACKGROUND

An electrode core of a power battery mainly includes a positive electrode sheet, a separator, a negative electrode sheet, and the like. An electrode sheet includes a current collector and a coating layer. In related technologies, to achieve a higher battery capacity, a thickness of the current collector is gradually reduced to accommodate more coating layers within the battery. However, this leads to a gradual reduction in thickness of tabs formed at both ends of the current collector. The reduced thickness of the tabs results in a decrease in current-carrying capability of the tabs, causing excessive temperature rise of the tabs during fast charging, which affects the fast-charging capability of the battery.

### SUMMARY

To overcome the problems existing in the related technology, the present disclosure provides an electrode sheet, an electrode core, a battery, and a power device.

According to a first aspect of embodiments of the present disclosure, an electrode sheet is provided, including:
a current collector; and
a coating layer, stacked on a surface of the current collector, wherein
a portion of the current collector at an end exposed from the coating layer is formed as a tab, and a foil piece is disposed on the tab, wherein a ratio of a thickness of the foil piece to a thickness of the current collector is not greater than 5.

According to one embodiment of this application, the ratio of the thickness of the foil piece to the thickness of the current collector ranges from 0.5 to 3.

According to one embodiment of this application, the tab is formed at both ends of the current collector, and each tab is provided with the foil piece.

According to one embodiment of this application, the foil piece includes a first foil piece and a second foil piece, the thickness of the foil piece is a sum of a thickness of the first foil piece and a thickness of the second foil piece, and the first foil piece and the second foil piece are respectively disposed on opposite side surfaces of the tab.

According to one embodiment of this application, the first foil piece and the second foil piece have the same dimensions.

According to one embodiment of this application, in a length direction of the current collector, a distance between an edge of the foil piece at an end close to the coating layer and the coating layer ranges from 0.2 mm to 3 mm.

According to one embodiment of this application, in the length direction of the current collector, an edge of the foil piece at an end away from the coating layer coincides with an edge of the tab, and in a width direction of the current collector, edges at both ends of the foil piece coincide with edges at both ends of the tab.

According to one embodiment of this application, the thickness of the foil piece is less than a thickness of the coating layer.

According to one embodiment of this application, the foil piece is copper foil or aluminum foil.

According to one embodiment of this application, a length of the electrode sheet ranges from 280 mm to 1500 mm.

According to one embodiment of this application, a length of the tab ranges from 10 mm to 40 mm.

According to one embodiment of this application, a width of the electrode sheet ranges from 75 mm to 198 mm.

According to one embodiment of this application, a width of the tab ranges from 50 mm to 170 mm.

According to a second aspect of embodiments of the present disclosure, an electrode core is provided, including a plurality of stacked electrode sheets. The electrode sheet is the electrode sheet according to any one of the above embodiments.

According to a third aspect of embodiments of the present disclosure, a battery is provided, including a housing and an electrode core disposed within the housing. The electrode core is the electrode core described above.

According to one embodiment of this application, a length of the battery ranges from 300 mm to 1500 mm.

According to one embodiment of this application, a width of the battery ranges from 80 mm to 200 mm.

According to one embodiment of this application, a thickness of the battery ranges from 10 mm to 30 mm.

According to a fourth aspect of embodiments of the present disclosure, a power device is provided, including the battery according to any one of the above embodiments.

The technical solutions provided in embodiments of the present disclosure may include the following beneficial effects: the foil piece is disposed on the tab at both ends of the current collector, and the foil piece can carry a current, which is equivalent to increasing the thickness of the tab. When the thickness of the tab increases, a cross-sectional area of the tab also increases. When the cross-sectional area of the tabs increases, resistance of the tab decreases, resulting in less heat generation under the same current and a smaller temperature rise at a tab region. Similarly, under the same temperature rise, the thickened tab can carry a larger current. Without contradicting the trend of gradually reducing the thickness of the current collector in the related technologies, the thickness of the tab is ensured by using the foil piece. When the electrode sheet is used in the battery, the fast-charging capability of the battery can be improved while avoiding excessive temperature rise of the tab during fast charging. Based on the improvement effect of the foil piece on the current-carrying capability of the tab and consideration of a connection process between the foil piece and the tab, the ratio of the thickness of the foil piece to the thickness of the current collector is not greater than 5. That is, the thickness of the foil piece is at most 5 times the thickness of the current collector. This ensures the improvement effect of the foil piece on the current-carrying capability of the tab while also allowing the foil piece and the tab to be connected by a welding process.

It will be understood that the foregoing general descriptions and the following detailed descriptions are merely examples for explanation, and are not intended to limit the present disclosure.

### BRIEF DESCRIPTION OF DRAWINGS

The accompanying drawings are intended to provide a further understanding of the present disclosure, constitute a part of this specification, and are used together with the following specific implementations to explain the present disclosure, but do not constitute a limitation on the present disclosure. In the accompanying drawings:
FIG. 1 is a diagram of a structure of an electrode sheet according to an example embodiment;
FIG. 2 is a diagram of installation of a foil piece according to an example embodiment;
FIG. 3 is a diagram of a structure of an electrode core according to an example embodiment;
FIG. 4 is a diagram of installation of an electrode core according to an example embodiment;
FIG. 5 is a diagram of a structure of a battery according to an example embodiment;
FIG. 6 is a diagram of installation of an electrode core and a cover plate according to an example embodiment; and
FIG. 7 is a diagram of a structure of an electrode sheet according to an example embodiment, where a foil piece includes a first foil piece and a second foil piece.

### DESCRIPTION OF REFERENCE NUMERALS

1: electrode sheet; 11: current collector; 111: tab; 12: coating layer; 2: foil piece; 21: first foil piece; 22: second foil piece; 3: electrode core; 31: first separator; 32: second separator; 4: case; 5: cover plate; 6: battery; 7: housing.

### DESCRIPTION OF EMBODIMENTS

The following describes in detail specific implementations of the present disclosure with reference to accompanying drawings. It will be understood that the specific implementations described herein are merely used to illustrate and explain the present disclosure, but are not intended to limit the present disclosure.

In the present disclosure, unless otherwise specified, directional terms used are based on a normal use state of a control box provided in the present disclosure. The terms "inner" and "outer" may, based on a specific context, refer to an interior and an exterior of a contour of a corresponding component, or to an interior or an exterior of an environment in which the component is located. In addition, when the following description relates to the accompanying drawings, unless specified otherwise, same numbers in different accompanying drawings represent the same or similar element. Terms such as "first" and "second" used in the present disclosure are intended to distinguish one element from another and do not imply any order or importance.

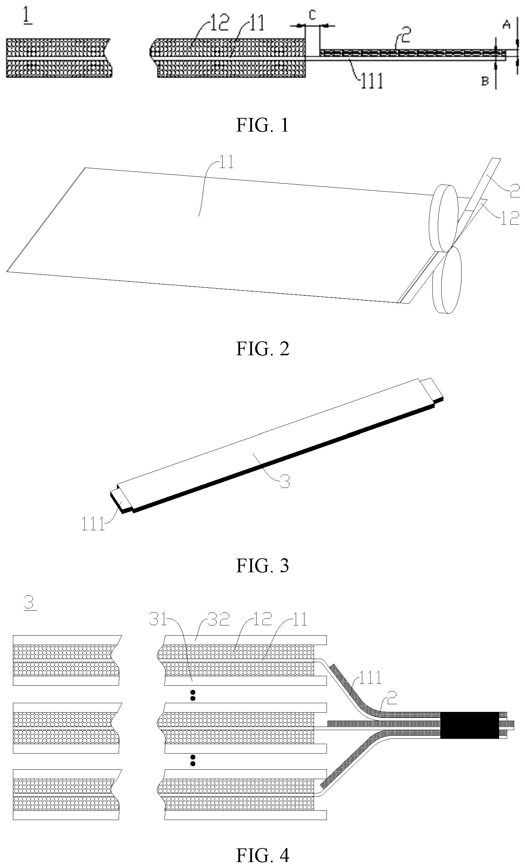

As shown in FIG. 1 to FIG. 4 and FIG. 7, the present disclosure provides an electrode sheet 1, including a current collector 11 and a coating layer 12. The coating layer 12 is stacked on a surface of the current collector 11.

Taking the application of the electrode sheet 1 in a lithium-ion battery as an example, the current collector 11 is mainly configured for electron transport. The current collector 11 can provide a conductive channel for electrons, so that a current can flow smoothly between a positive electrode and a negative electrode. The current collector 11 in this embodiment may be made of copper foil or aluminum foil commonly used in the art. In the lithium-ion battery, the electrode sheets 1 usually include an electrode sheet 1 serving as a positive electrode and an electrode sheet 1 serving as a negative electrode. The current collector 11 on the electrode sheet 1 serving as the positive electrode may be aluminum foil, and the current collector 11 on the electrode sheet 1 serving as the negative electrode may be copper foil. If the aluminum foil serves as the negative electrode, when a potential of the negative electrode is less than 1.0 V, the current collector 11 on the electrode sheet 1 serving as the negative electrode is intercalated with lithium to form a lithium-aluminum alloy.

The coating layer 12, also referred to as battery slurry, may be disposed on one side surface of the current collector 11 or on both side surfaces of the current collector 11. The coating layer 12 affects the capacity and cycle performance of the lithium-ion battery, and a thickness of the coating layer 12 is related to properties such as the capacity and internal resistance of the lithium-ion battery. In the lithium-ion battery, the coating layer 12 on the electrode sheet 1 serving as the positive electrode may be referred to as a positive electrode coating. The positive electrode coating is usually made of a mixture of a lithium compound and a conductive material, and a main function of the positive electrode coating is to release positive charge outward. The positive electrode coating may be made of lithium cobalt oxide, a ternary material, or lithium iron phosphate commonly used in the art. The coating layer 12 on the electrode sheet 1 serving as the negative electrode may be referred to as a negative electrode coating. The negative electrode coating may be made of a graphite material commonly used in the art, and a main function of the negative electrode coating is to release negative charge outward. Due to special properties of the lithium-ion battery, the negative electrode coating usually needs to have specific diffusivity and reversibility to ensure rapid conduction and recycling of charge.

Referring to FIG. 1 to FIG. 4, a portion of the current collector 11 at an end exposed from the coating layer 12 is formed as a tab 111, and a foil piece 2 is disposed on the tab 111, where a ratio of a thickness of the foil piece 2 to a thickness of the current collector 11 is not greater than 5. According to the foregoing technical solution, the foil piece 2 is disposed on the tab 111 at the end of the current collector 11, and the foil piece 2 can increase a thickness of the tab 111. When the thickness of the tab 111 increases, a cross-sectional area of the tab 111 also increases. When the cross-sectional area of the tab 111 increases, resistance of the tab 111 decreases, thereby increasing a current-carrying capability of the tab 111. Without contradicting the trend of gradually reducing the thickness of current collector 11 in the related technologies, the thickness of the tab 111 is ensured by using the foil piece 2. When the electrode sheet 1 is used in a battery 6, the fast-charging capability of the battery 6 can be improved while avoiding excessive temperature rise of the tab 111 during fast charging. Based on an improvement effect of the foil piece 2 on the current-carrying capability of the tab 111 and consideration of a connection process between the foil piece 2 and the tab 111, the ratio of the thickness of the foil piece 2 to the thickness of the current collector 11 is not greater than 5. That is, the thickness of the foil piece 2 is at most 5 times the thickness of the current collector 11. This ensures the improvement effect of the foil piece 2 on the current-carrying capability of the tab 111 while also allowing the foil piece 2 and the tab 111 to be connected by a welding process.

It will be noted that the foil piece 2 mentioned above is a metal sheet (for example, aluminum foil or copper foil) having a current carrying and conducting capability. The thickness of the foil piece 2 means the thickness of the foil piece 2 disposed on one tab 111. Referring to FIG. 1, a straight-line distance A indicates the thickness of the foil piece 2, and a straight-line distance B indicates the thickness of the current collector 11. The thickness of the foil piece 2 may be selectively adjusted based on an actual requirement of the current-carrying capability of the tab 111. As the thickness of the foil piece 2 on the tab 111 increases, the temperature rise of the tab 111 decreases accordingly when the tab 111 is in a weak current-carrying state. Once the current-carrying capability of the tab 111 meets the requirement, further increasing the thickness of the foil piece 2 results in a gradually reduced effect on reducing the temperature rise of the tab 111.

The foil piece 2 and the tab 111 may be connected by a welding process. The welded connection offers high integrity, which can ensure a connection area of the foil piece 2 and the tab 111, so that the foil piece 2 and the tab 111 are not prone to deformation. Meanwhile, the welded connection offers high welding strength, which ensures connection strength of the foil piece 2 and the tab 111. Further, the foil piece 2 and the tab 111 may be connected by ultrasonic welding or laser welding. Ultrasonic welding is energy-saving and environmentally friendly, does not require ventilation apparatus for fume extraction and heat dissipation, and can achieve seamless welding. Because both the tab 111 and the foil piece 2 are thin sheets, the foil piece 2 and the tab 111 can be connected by ultrasonic rotary welding. For details, referring to FIG. 2, FIG. 2 is a diagram of installation of the foil piece 2, indicating that the foil piece 2 is being installed. During ultrasonic rotary welding, the foil piece 2 and the tab 111 may be clamped between two rollers, and the welded connection between the foil piece 2 and the tab 111 is achieved when the rollers move. Laser welding offers a high welding speed, thereby ensuring production efficiency. A weld seam produced by laser welding has high quality and a good appearance, so that high-precision welding can be achieved.

When the electrode sheet 1 is used in the battery 6, a plurality of electrode sheets 1 need to be stacked to form the electrode core 3. Referring to FIG. 3 and FIG. 4, a plurality of tabs 111 provided with foil pieces 2 can also be connected by ultrasonic welding or laser welding. Based on consideration of manufacturing processes of the current collector 11 and the foil piece 2, as well as whether a total thickness of the foil piece 2 and tab 111 can be connected by ultrasonic welding or laser welding, the ratio of the thickness of the foil piece 2 to the thickness of the current collector 11 may range from 0.5 to 3. That is, the thickness of the foil piece 2 may be at least 0.5 times the thickness of the current collector 11, and the thickness of the foil piece 2 may be at most 3 times the thickness of the current collector 11.

**Table 1**

| Experimental protocol | Current collector thickness/mm | Foil piece thickness/mm | Weldability of the current collector and the foil piece | Temperature rise at the tab/°C | Foil piece thickness/Current collector thickness |
|---|---|---|---|---|---|
| Original protocol | 0.0045 | 0 | / | 81.5 | / |
| Protocol 1 | 0.0045 | 0.0035 | OK | 74.7 | 0.78 |
| Protocol 2 | 0.0045 | 0.006 | OK | 71.5 | 1.33 |
| Protocol 3 | 0.0045 | 0.008 | OK | 71.1 | 1.7 |
| Protocol 4 | 0.005 | 0.006 | OK | 70 | 1.2 |
| Protocol 5 | 0.0045 | 0.0025 | OK | 76.2 | 0.55 |
| Protocol 6 | 0.0045 | 0.012 | OK | 70.6 | 2.78 |
| Protocol 7 | 0.0045 | 0.015 | OK | 70.5 | 3.33 |

Table 1 shows the temperature rise of the tab 111 in the battery 6 under specified experimental conditions after the tab 111 is provided with the foil piece 2 and used in the battery 6. The specified experimental conditions are as follows: ambient temperature of 40°C, equivalent current of 310 A, and duration of 12 min (simulating fast charging of the battery from 10% to 80% state of charge within 12 min), and temperature rise data is collected by using an Agilent data acquisition unit. A thickness of the battery 6 is 13.5 mm. The current collector 1 and the foil piece 2 both have a width of 71 mm and each has 35 layers. A quantity of layers of the electrode sheet 1 is 35, which means that 35 electrode sheets 1 are stacked to form the electrode core 3. A quantity of layers of the foil piece 2 is the same as that of electrode sheet 1, which means that one tab 111 is provided with one foil piece 2. Taking the connection of a plurality of tabs 111 provided with foil pieces 2 by ultrasonic welding or laser welding as an example, the weldability of the current collector 11 and the foil piece 2 when connected by ultrasonic welding or laser welding may be determined based on the total thickness of the current collector 11 and the foil piece 2.

Still referring to Table 1, in the original protocol, the tab 111 in the battery 6 is not provided with the foil piece 2. In this case, the temperature rise at the tab 111 reached 81.5°C after the battery 6 is fast charged. In the protocols 1 to 7, the tab 111 in the battery 6 is provided with the foil piece 2. After the battery 6 is fast charged, the temperature rise at the tab 111 is significantly less than 81.5°C in the protocols 1 to 7. In addition, the degree of reduction in temperature rise at the tab 111 varies among the protocols 1 to 7 based on the ratio of the thickness of the foil piece 2 to the thickness of the current collector 11. Experimental findings indicate that when the ratio of the thickness of foil piece 2 to the thickness of current collector 11 is greater than 3, the reduction in temperature rise at the tab 111 no longer shows significant improvement. Therefore, in consideration of cost and manufacturability, the ratio may be set to range from 0.5 to 3.

In some embodiments, tabs 111 may be formed at both ends of the current collector 11, and the foil piece 2 may be disposed on each tab 111. In this way, the tabs 111 at both ends of the current collector 11 can increase the current-carrying capability by the foil piece 2, thereby improving the fast-charging capability of the battery 6 while avoiding excessive temperature rise at the tabs 111 at both ends of the current collector 11 during fast charging.

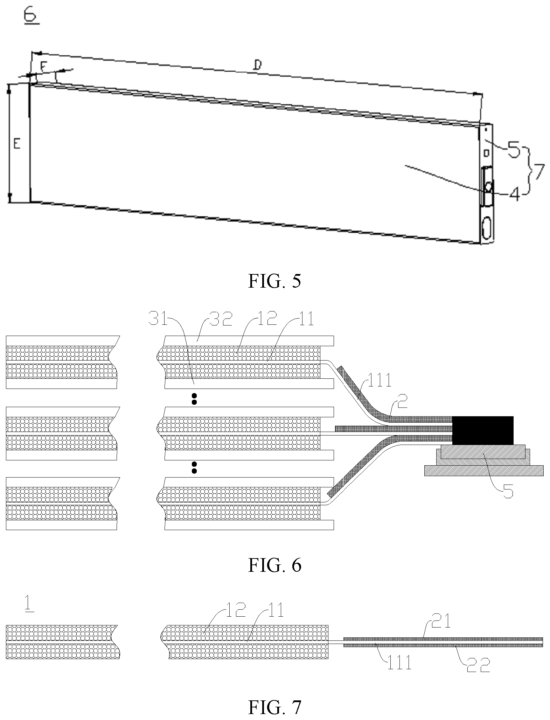

In some embodiments, the foil piece 2 may include a first foil piece 21 and a second foil piece 22. For details, referring to FIG. 7, the first foil piece 21 and the second foil piece 22 are respectively disposed on opposite side surfaces of the tab 111. In this case, the thickness of the foil piece 2 mentioned above means a sum of a thickness of the first foil piece 21 and a thickness of the second foil piece 22. Further, the first foil piece 21 and the second foil piece 22 may have the same dimensions. The dimensions herein may be a side length and a thickness. When the dimensions are the same, the first foil piece 21 and the second foil piece 22 can be manufactured together, and can also be connected to the tab 111 by using the same connection configuration.

In some implementations, in a length direction of the current collector 11, a distance between an edge of the foil piece 2 at an end close to the coating layer 12 and the coating layer 12 may range from 0.2 mm to 3 mm. Referring to FIG. 1, a straight-line distance C indicates the distance between the edge of the foil piece 2 at the end close to the coating layer 12 and the coating layer 12. This allows the foil piece 2 to be as close as possible to the coating layer 12 without touching the coating layer 12, thereby maximizing an area of the foil piece 2, and enabling the foil piece 2 to cover the tab 111 as much as possible. Consequently, a proportion of a region of the tab 111 with a larger cross-sectional area increases relative to the entire tab 111, allowing an effect of the foil piece 2 to be better achieved. The coating layer 12 on the current collector 11 affects the capacity and cycle performance of the battery 6, and the thickness of the coating layer 12 is related to properties such as the capacity and internal resistance of the battery 6. Therefore, contact between the foil piece 2 and the coating layer 12 should be avoided. It will be noted that the "length direction" herein is relative and specifically refers to a direction in which the tab 111 protrudes from the coating layer 12, that is, a left-right direction of the drawing in FIG. 1.

When the electrode sheet 1 is used in the battery 6, a plurality of electrode sheets 1 need to be stacked to form the electrode core 3, and a plurality of tabs 111 provided with foil pieces 2 need to be connected. When the plurality of tabs 111 provided with the foil pieces 2 are connected, the tabs 111 may be partially bent. If the distance between the edge of the foil piece 2 at the end close to the coating layer 12 and the coating layer 12 is too small, the foil piece 2 may be in contact with the coating layer 12 when the tab 111 bends, thereby affecting the use of the battery 6. If the distance between the edge of the foil piece 2 at the end close to the coating layer 12 and the coating layer 12 is too large, the proportion of the region of the tab 111 with a larger cross-sectional area decreases relative to the entire tab 111, making it difficult for the foil piece 2 to achieve the effect.

In the length direction of the current collector 11, an edge of the foil piece 2 at an end away from the coating layer 12 may coincide with an edge of the tab 111. In a width direction of the current collector 11, edges at both ends of the foil piece 2 may coincide with edges at both ends of the tab 111. In this way, the foil piece 2 can cover the tab 111 as much as possible without extending beyond the edge of the tab 111. The proportion of the region of the tab 111 with a larger cross-sectional area increases relative to the entire tab 111, allowing the effect of the foil piece 2 to be better achieved.

The thickness of foil piece 2 may be less than the thickness of coating layer 12. When the electrode sheet 1 is used in the battery 6, a plurality of electrode sheets 1 need to be stacked to form the electrode core 3. If the thickness of the foil piece 2 is greater than or equal to the thickness of the coating layer 12, the stacking of the electrode sheets 1 is affected, thereby affecting strength of the electrode core 3.

Taking the application of the electrode sheet 1 in a lithium-ion battery as an example, the current collector 11 is mainly configured for electron transport. The current collector 11 may be made of copper foil or aluminum foil commonly used in the art. The foil piece is disposed on the tabs 111 at both ends of the current collector 11. Correspondingly, the foil piece 2 may also be copper foil or aluminum foil. Copper foil and aluminum foil are relatively stable in air. Copper foil and aluminum foil have good electrical conductivity, a soft texture, and low costs. It will be noted that the material of the foil piece 2 is not limited in the present disclosure, and a foil piece 2 made of any appropriate material may be selected, provided that a usage requirement of the foil piece 2 can be met.

The dimensions of the electrode sheet 1 and the tab 111 are not limited in the present disclosure. The dimensions of the electrode sheet 1 and the tab 111 can be adaptively adjusted based on dimensions of the battery 6 (for example, a blade battery mentioned below). For example, a length of electrode sheet 1 may range from 280 mm to 1500 mm, a length of tab 111 may range from 10 mm to 40 mm, a width of electrode sheet 1 may range from 75 mm to 198 mm, and a width of tab 111 may range from 50 mm to 170 mm.

According to a second aspect of the present disclosure, an electrode core 3 is further provided, including a plurality of stacked electrode sheets 1. The electrode sheet 1 is the electrode sheet 1 according to any of the foregoing implementations and has all the beneficial effects thereof. Details are not described herein again.

A first separator 31 may be disposed between coating layers 12 of two adjacent electrode sheets 1, and a second separator 32 may be provided on an outer surface of an outermost electrode core 3. The first separator 31 can prevent mutual interference between the plurality of electrode sheets 1, and play a role of guiding movement of charge, thereby facilitating the movement of charge from one end to the other. The second separator 32 can prevent the coating layer 12 located on the outer surface of the outermost electrode core 3 from being in contact with another structure. Taking the application of the electrode core 3 in a lithium-ion battery as an example, the first separator 31 and the second separator 32 may be made of the same material, for example, a polyolefin material commonly used in the field of lithium-ion batteries, which has excellent properties such as high temperature resistance, corrosion resistance, and tear resistance.

In the electrode core 3, the plurality of stacked electrode sheets 1 usually include an electrode sheet 1 serving as a positive electrode and an electrode sheet 1 serving as a negative electrode. Taking a case in which the foil piece 2 may be copper foil or aluminum foil as an example, the foil piece 2 on the electrode sheet 1 serving as the positive electrode may be aluminum foil, and the foil piece 2 on the electrode sheet 1 serving as the negative electrode may be copper foil. If the aluminum foil serves as the negative electrode, when a potential of the negative electrode is less than 1.0 V, the current collector 11 on the electrode sheet 1 serving as the negative electrode is intercalated with lithium to form a lithium-aluminum alloy.

In the electrode core 3, when a thickness of the electrode core 3 is large, a quantity of stacked electrode sheets 1 is large, and a quantity of tabs 111 that need to be connected is also large. When the quantity of tabs 111 that need to be connected is large, it is necessary to avoid an excessive thickness of the foil piece 2. Taking the ultrasonic welding or laser welding mentioned above as an example, when the quantity of tabs 111 that need to be connected is large and the thickness of the foil piece 2 is also large, it becomes difficult to connect the plurality of tabs 111 by ultrasonic welding or laser welding.

As shown in FIG. 5 and FIG. 6, according to a third aspect of the present disclosure, a battery 6 is further provided, including a housing 7 and an electrode core 3 disposed within the housing 7. The electrode core 3 is the electrode core 3 described above and has all beneficial effects thereof. Details are not described herein again. The battery 6 herein may be a blade battery. The blade battery is a long, thin, single-cell lithium iron phosphate battery shaped like a blade. Due to its excellent performance, the blade battery has been widely used in new energy electric vehicles. As range requirements for the new energy electric vehicles gradually increase, the capacity requirement for the blade battery has gradually increased, and further, the fast-charging capability requirement for the blade battery has become increasingly demanding. Taking a case in which the battery 6 is a blade battery as an example, the housing 7 may include a case 4 and a cover plate 5. The case 4 is provided with a through channel, and the cover plate 5 is configured to seal channel openings at both ends of the case 4. Referring to FIG. 5, the case 4 may be constructed in a long, thin blade-like shape. The through channel formed in the case 4 may accommodate the electrode core 3. Meanwhile, the case 4 can also limit a position of the electrode core 3, to ensure stability of the electrode core 3. Still referring to FIG. 6, tabs 111 at both ends of the electrode core 3 are connected to the cover plate 5. The cover plate 5 seals the case 4 and further protects the electrode core 3. The cover plate 5 may be provided with a connection structure that allows a plurality of blade batteries to be interconnected. Through the connection structure of the cover plate 5, the plurality of blade batteries may be interconnected to form a blade battery pack, so that the blade battery can be used in a wider range of application scenarios.

Due to its unique long, thin shape, the blade battery, despite strong overall product performance, has a relative weakness, namely, the fast-charging capability. Regardless of material differences, the blade battery is subject to structural constraints that result in significantly higher internal resistance during use compared to a conventional power battery. If a fast-charging function is further integrated into the blade battery, the high internal resistance of the blade battery during use causes the blade battery to generate more heat during fast charging. A primary heat generation point of the blade battery is at the tab 111. This makes heat dissipation of the battery pack a constraint. During fast charging, a temperature difference between the two ends of the blade battery and a middle region of the blade battery further increases, affecting various performance aspects of the blade battery. This is especially true today, as the capacity of the blade battery continues to increase, that is, the electrode sheet 1 becomes thinner to allow more coating layers to be disposed within the blade battery. The temperature uniformity of the battery pack during fast charging requires a high degree of consistency, which further increases heat dissipation burden on the battery pack.

Still referring to FIG. 5, in FIG. 5, a straight-line distance D indicates a length of the blade battery, a straight-line distance E indicates a width of the blade battery, and a straight-line distance F indicates a thickness of the blade battery. The length of a blade battery may range from 300 mm to 1500 mm. Herein, a blade battery with a length of 300 mm to 700 mm may be referred to as a short-blade battery, and a blade battery with a length of 700 mm to 1500 mm may be referred to as a long-blade battery. The terms "long blade" and "short blade" are relative and are not strictly defined. For both a long-blade battery and a short-blade battery, the width of the blade battery may range from 80 mm to 200 mm, and the thickness may range from 10 mm to 30 mm. This means that the long-blade battery and the short-blade battery may differ only in length.

As described above, the dimensions of the electrode sheet 1 and the tab 111 can be adjusted based on dimensions of the blade battery. The width of the tab 111 can be designed based on the width of the blade battery. The wider the blade battery, the wider the electrode core 3 accommodated inside the blade battery, and accordingly, the wider the tab 111 can be. The length of tab 111 can be designed based on the thickness of the blade battery. The thicker the blade battery, the longer the required length of the tab 111.

According to a fourth aspect of the present disclosure, a power device is further provided, including the battery 6 according to any of the foregoing implementations and having all the beneficial effects thereof. Details are not described herein again. The power device may be a power device that requires the battery 6, for example, a new energy electric vehicle.

Preferred implementations of the present disclosure are described above in detail with reference to the accompanying drawings. However, the present disclosure is not limited to details in the foregoing implementations. Within the scope of the technical concept of the present disclosure, a plurality of simple variations may be made to the technical solutions of the present disclosure, and all these simple variations fall within the protection scope of the present disclosure.

In addition, it will be noted that the specific technical features described in the foregoing specific implementations may be combined in any proper manner if there is no conflict. To avoid unnecessary repetition, various possible combinations are not further described in the present disclosure.

In addition, any combination of various different implementations of the present disclosure may be employed, and such combination shall also be considered as the content disclosed in the present disclosure, provided that the combination does not depart from the idea of the present disclosure.

## Claims

1. An electrode sheet, comprising:
a current collector (11); and
a coating layer (12), stacked on a surface of the current collector (11), wherein
a portion of the current collector (11) at an end exposed from the coating layer (12) is formed as a tab (111), and a foil piece (2) is disposed on the tab (111), wherein a ratio of a thickness of the foil piece (2) to a thickness of the current collector (11) is not greater than 5.

2. The electrode sheet according to claim 1, wherein the ratio of the thickness of the foil piece (2) to the thickness of the current collector (11) ranges from 0.5 to 3.

3. The electrode sheet according to claim 1 or 2, wherein the tab (111) is formed at both ends of the current collector (11), and each tab (111) is provided with the foil piece (2).

4. The electrode sheet according to any one of claims 1 to 3, wherein the foil piece (2) comprises a first foil piece (21) and a second foil piece (22), the thickness of the foil piece (2) is a sum of a thickness of the first foil piece (21) and a thickness of the second foil piece (22), and the first foil piece (21) and the second foil piece (22) are respectively disposed on opposite side surfaces of the tab (111).

5. The electrode sheet according to claim 4, wherein the first foil piece (21) and the second foil piece (22) have the same dimensions.

6. The electrode sheet according to any one of claims 1 to 5, wherein in a length direction of the current collector (11), a distance between an edge of the foil piece (2) at an end close to the coating layer (12) and the coating layer (12) ranges from 0.2 mm to 3 mm.

7. The electrode sheet according to any one of claims 1 to 6, wherein in the length direction of the current collector (1), an edge of the foil piece (2) at an end away from the coating layer (12) coincides with an edge of the tab (111), and in a width direction of the current collector (11), an edge of the foil piece (2) coincides with an edge of the tab (12).

8. The electrode sheet according to any one of claims 1 to 7, wherein the thickness of the foil piece (2) is less than a thickness of the coating layer (12).

9. The electrode sheet according to any one of claims 1 to 8, wherein the foil piece (2) is copper foil or aluminum foil.

10. The electrode sheet according to any one of claims 1 to 9, wherein a length of the electrode sheet (1) ranges from 280 mm to 1500 mm.

11. The electrode sheet according to any one of claims 1 to 10, wherein a length of the tab (111) ranges from 10 mm to 40 mm.

12. The electrode sheet according to any one of claims 1 to 11, wherein a width of the electrode sheet (1) ranges from 75 mm to 198 mm.

13. The electrode sheet according to any one of claims 1 to 12, wherein a width of the tab (111) ranges from 50 mm to 170 mm.

14. An electrode core, wherein the electrode core (3) comprises a plurality of stacked electrode sheets (1), and the electrode sheet (1) is the electrode sheet (1) according to any one of claims 1 to 13.

15. A battery, wherein the battery (6) comprises a housing (7) and an electrode core (3) disposed within the housing (7), and the electrode core (3) is the electrode core (3) according to claim 14.

16. The battery according to claim 15, wherein a length of the battery (6) ranges from 300 mm to 1500 mm.

17. The battery according to claim 15 or 16, wherein a width of the battery (6) ranges from 80 mm to 200 mm.

18. The battery according to any one of claims 15 to 17, wherein a thickness of the battery (6) ranges from 10 mm to 30 mm.

19. A power device, comprising the battery (6) according to any one of claims 15 to 18.
